# EUROPEAN PATENT APPLICATION

(11) **EP 2 194 518 A1**
(43) Date of publication of application: **09.06.2010**
(21) Application number: 07791675.7
(22) Date of filing: 31.07.2007
(51) Int. Cl.: G09B 29/10, G01C 21/00, G06F 3/048, G08G 1/0969

(54) **MAP DISPLAY DEVICE**

(71) Applicant: Clarion Co., Ltd., Bunkyo-ku Tokyo 112-8608 (JP)
(72) Inventor: IWANO, Katsumi, Tokyo 112-8608 (JP)
(74) Representative: MERH-IP Matias Erny Reichl Hoffmann
(86) International application number: PCT/JP2007/064991
(87) International publication number: WO 2009/016736

(57) **Abstract**

MAP DISPLAY DEVICE

A circular contour is drawn by hand so as to surround icons 21a through 21f that are crowded together. As a result, a circle 32 is drawn upon a display monitor 16 at almost the same position and of almost the same size as the circle that was drawn by hand. The user presses a position on the circumference of this circle 32. As a result, among the icons 21 a through 21f that are crowded together, only the icons 21b, 21 d, and 21f that are shifting in the direction from the center of the circle 32 towards the position of pressing are displayed.

## Description

### TECHNICAL FIELD

The present invention relates to a map display device that displays certain icons as overlaid upon a map.

### BACKGROUND ART

A prior art technique is per se known in which a car navigation device displays a shifting subject such as a whirlwind or the like as an icon overlaid upon a map (for example, refer to Patent Document #1).
Patent Document #1: Japanese Laid-Open Patent Publication 2006-145473.

### DISCLOSURE OF THE INVENTION

### PROBLEMS TO BE SOLVED BY THE INVENTION

With this prior art car navigation device as described in Patent Document #1, if several whirlwinds or the like are taking place locally, so that the subjects that are shifting are crowded together, then their icons that are being displayed as overlaid upon the map are also displayed as being crowded together. Due to this, there is the problematical aspect that the visibility of the icons becomes bad.

### MEANS FOR SOLVING THE PROBLEMS

The map display device according to the present invention comprises: a map display control unit that displays a map upon a display monitor; an icon display control unit that displays a plurality of shifting subjects as icons upon a map; an icon designation unit that designates, from among the plurality of icons being displayed, a plurality of icons that are crowded together; and a shift direction designation unit that designates a shift direction of icons to be searched for; wherein the icon display control unit displays, among the icons designated by the icon designation unit, those icons that are shifting in approximately the same direction as the shift direction designated by the shift direction designation unit. The shifting subjects are related to weather. It is preferred that the display monitor comprises a touch panel, and that the icon designation unit designates icons that have been surrounded by a contour drawn while the touch panel is being pressed. This map display device further comprises a circular contour display control unit that displays a circular contour over the map, on the basis of the contour drawn while the touch panel is being pressed, and the shift direction designation unit designates the shift direction on the basis of a position upon the circumference of the circular contour that is pressed. In the map display device according to the present invention that further comprises an icon selection unit that selects a plurality of specified icons from among a plurality of icons displayed within the circular contour, it is preferred that the map display control unit changes the scale of the map so that the selected plurality of icons do not overlap one another. In addition, the icon selection unit selects, from among the plurality of icons designated by the icon designation unit that are crowded together, those icons that overlap a contour drawn while the touch panel is being pressed.

### ADVANTAGEOUS EFFECT OF THE INVENTION

According to the present invention, it is arranged to select the icons to be displayed, according to the direction in which the icons are shifting. Due to this, by designating a shift direction, it is possible for the user to select and display the required icon or icons. Accordingly the icon visibility becomes good, since the icons are not displayed as being crowded together.

### BRIEF DESCRIPTION OF THE DRAWINGS

Fig. 1 is a block diagram showing the structure of a navigation device according to an embodiment of the present invention;
Fig. 2 is a pair of figures for explanation of a map upon which icons for showing weather information are displayed;
Fig. 3 is a pair of figures for explanation of an operation for designating, from among these icons displayed upon the map for showing weather information, certain desired icons;
Fig. 4 is a pair of figures for explanation of an operation for selecting, from among these designated icons, only those icons that are shifting in a specific direction for display upon a display monitor;
Fig. 5 is a figure for explanation of an operation for displaying details of weather information corresponding to a certain desired icon;
Fig. 6 is a flow chart for explanation of icon display processing in this embodiment of the present invention;
Fig. 7 is another flow chart for explanation of icon display processing in this embodiment of the present invention;
Fig. 8 is a figure for explanation of an operation to change the scale of the map;
Fig. 9 is a flow chart for explanation of the icon display processing in a variant embodiment #1 of the present invention;
Fig. 10 is a pair of figures for explanation of an operation for changing the scale of the map so that the icons are not displayed as overlapped over one another;
Fig. 11 is a flow chart for explanation of icon display processing in a variant embodiment #2;
Fig. 12 is another flow chart for explanation of the icon display processing in this variant embodiment #2; and
Fig. 13 is a pair of figures for explanation of a map upon which the current positions of taxis are displayed as icons.

### BEST MODES FOR CARRYING OUT THE INVENTION

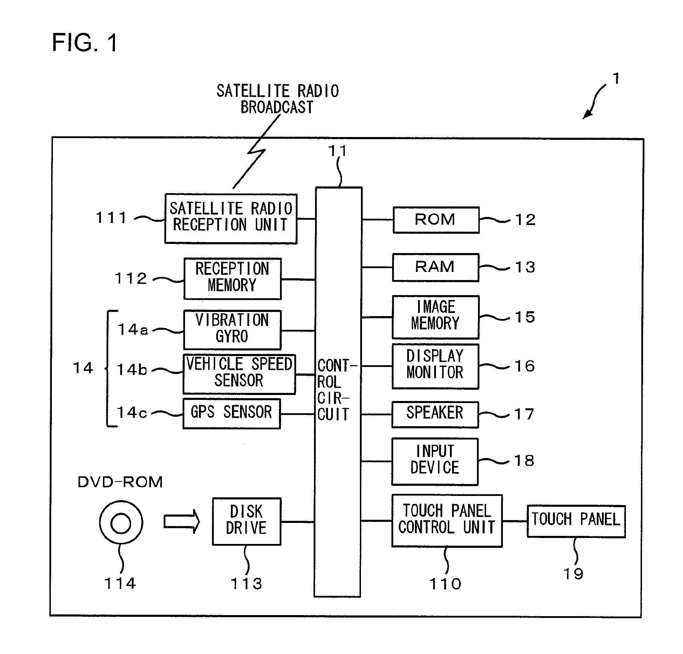

Fig. 1 shows a navigation device 1 according to an embodiment of the present invention. This navigation device 1 is able to receive weather information from a satellite radio broadcast and to display this weather information upon a display monitor 16 as overlaid upon a map. This per se known satellite radio broadcast may, for example, be the Sirius satellite radio or the like. The navigation device 1 includes a control circuit 11, a ROM 12, a RAM 13, a current position detection device 14, an image memory 15, a display monitor 16, a speaker 17, an input device 18, a touch panel 19, a touch panel control unit 110, a satellite radio reception unit 111, a reception memory 112, and a disk drive 113. A DVD-ROM 114 upon which map data is stored is loaded into the disk drive 113.

The control circuit 11 includes a microprocessor and its peripheral circuitry, and performs various types of control by executing a control program stored in the ROM 12, using the RAM 13 as a working area. When this control circuit 11 has performed certain route search processing on the basis of the map data stored upon the DVD-ROM 114, the result of this processing is displayed upon the display monitor 16 as a recommended route.

The current position detection device 14 is a device that detects the current position of a vehicle. This current position detection device 14 includes a vibration gyro 14a, a vehicle speed sensor 14b, a GPS (Global Positioning System) sensor 14c, and so on. The vibration gyro 14a detects the direction in which the vehicle is being driven. The vehicle speed sensor 14b detects the vehicle speed. And the GPS sensor 14c detects the GPS signals from the GPS satellites. The navigation device 1 determines a display range for the map, a start point for route searching, and so on, on the basis of the current position of the vehicle as detected by this current position detection device 14. And the current position of the vehicle is displayed upon the map as a subject vehicle position mark.

The image memory 15 stores image data for display upon the display monitor 16. This image data includes data for road map drawing and drawing data of various other types. This data is created as appropriate, on the basis of the map data stored upon the DVD-ROM 114 and so on. By using the image data created in this manner, the navigation device 1 is able to perform map display and so on.

The disk drive 113 reads out map data from the DVD-ROM 114. This map data includes data for map display, data for route searching, and so on. The data for map display and the data for route searching include link information and node information for roads stored in the map data. In this embodiment, the data for map display includes map data at seven stages of magnification, from wide area to detailed. Due to this, it is possible to change the scale of the displayed map in seven stages, in response to requests from the user. It should be understood that it would also be acceptable to arrange to read out the map data from some type of recording medium other than the DVD-ROM 114, for example from a CD-ROM or a hard disk or the like.

On the basis of the various types of information such as map data and so on, the display monitor 16 supplies various types of information to the user as a screen display, such as a map of the vicinity of the position of the subject vehicle and so on. The speaker 17 outputs audio for ordering the user to perform various types of input operation, and for route guidance and so on. The input device 18 includes actuation keys for the user to issue commands of various types, and is implemented as button switches upon an operation panel or hardware switches around the panel or the like. The actuation keys are included for the user to issue commands of various types; those keys are implemented as button switches upon the operation panel or hardware switches around the panel or the like. Moreover, by operating this input device 18, it is possible for the user to change the scale of the map being displayed upon the display monitor 16, and to scroll the map and so on. For example, the scale of the 1/50,000 map is 1 to 50,000. A destination may be set by the user manually operating the input device 18 according to commands upon the display screen of the display monitor 16, or according to audio commands from the speaker 17. Moreover, by operating the input device 18, it is possible to tune into a satellite radio broadcast.

When a destination has been set by the user, the navigation device 1 takes the current position detected by the current position detection device 14 as a departure point, and performs calculation of a route to that destination on the basis of some predetermined algorithm. The route that has been obtained in this manner (hereinafter termed the "recommended route") is shown upon the screen by changing some element of its display format, for example its display color or the like, so as to distinguish it from other roads. Due to this, it is possible for the user to recognize the recommended route upon the screen. Moreover, the navigation device 1 performs route guidance for the vehicle by issuing driving direction commands to the user via the screen or via audio or the like, so that he is able to drive the vehicle along the recommended route.

The touch panel 19 is a transparent touch switch that is laminated to the front surface of the display monitor 15. The image that is displayed upon the display monitor 16 is thus displayed through this touch panel 19. Accordingly, when the display screen of the display monitor 16 is pressed, the touch panel 19 is also pressed. And the touch panel 19 sends a signal to the touch panel control unit 110, corresponding to the position of this pressing operation upon the touch panel 19. The touch panel control unit 110 then calculates the position upon the touch panel 19 at which it has been pressed.

When the user presses any one of several buttons or a field of a menu displayed upon the display monitor 16 with his finger or the like, then the touch panel 19 outputs a touch signal, and processing is executed as defined by that button or by that field of the displayed menu.

The satellite radio reception unit 111 receives a satellite radio broadcast that is broadcast via an artificial satellite from a satellite radio station not shown in the figures, and outputs that broadcast to the control circuit 11. This satellite radio broadcast that has been received is outputted by the speaker 17. Moreover, the weather information in the satellite radio broadcast that has been received by the satellite radio reception unit 111 is stored in the reception memory 112.

This weather information in the satellite radio broadcast may include information for weather maps, information about storms such as hurricanes and so on, information from weather radar related to amounts and distribution of rainfall, information about wind direction and wind strength at various observational locations, and so on. The information for weather maps may include, for example, information about the positions of high pressure areas and/or low pressure areas (i.e. their latitudes and longitudes), information about the positions of warm fronts and/or cold fronts, and so on. The information about storms may include, for example, information about the observed positions of one or more regions in which hurricanes, whirlwinds, hail, hailstorms, thunderstorms and so on are occurring, and about their predicted paths (shift directions) and so on. And the information about the amounts and distribution of rainfall may include, for example, information about the observed positions where rain is falling and the amounts of rainfall at those positions and so on.

The reception memory 112 is a rewritable non-volatile recording medium such as a flash memory or a hard disk or the like. This reception memory 112 stores the weather information that has been received by the satellite radio reception unit 110 as a weather information table. Weather information stored in the reception memory 112 is displayed upon the map as icons.

When an icon that represents weather information upon the touch panel 19 is pressed, detailed information that corresponds to that icon is displayed upon the display monitor 16. For example, in the case of a hurricane, the central barometric pressure, the radius of the severe wind region and/or the strong wind region, the maximum wind speed, the amount of rainfall and so on may be displayed as this detailed information.

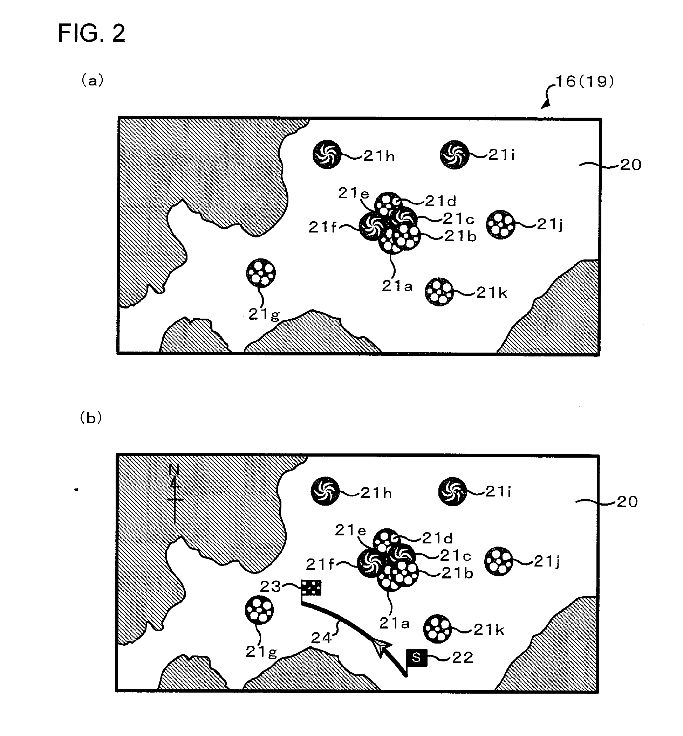

Next, the operation in this embodiment of the present invention for selecting and displaying icons will be explained with reference to Figs. 2 through 5. In this embodiment of the present invention, the icons that are to be displayed upon the display monitor are selected on the basis of the predicted future paths in the weather information that is being displayed with icons.

Fig. 2(a) is a figure for explanation of a screen that is displayed on the display monitor 16 when weather information display is selected from a menu not shown in the figures. As shown in Fig. 2(a), a map 20 is displayed upon the display screen, and icons 21a through 21k that provide weather information are displayed as overlaid upon this map 20. The icons 21a, 21b, 21d, 21e, 21g, 21j, and 2k are of a type that represents hailstorms or hail. And the icons 21c, 21f, 21h, and 2i are of a type that represents whirlwinds. The visibility is bad, because the icons 21a through 21f are crowded together.

And Fig. 2(b) is a figure for explanation of the relationship between the recommended route for the vehicle to be driven, and the icons 21a through 21k that provide weather information. As shown in Fig. 2(b), the vehicle is traveling from a departure point 22 along a recommended route 24 to a destination 23. Due to this, among the weather phenomena corresponding to the icons 21a through 21f that are the ones from among the icons 21a through 21k denoting weather information that are crowded together, the phenomena for which there is a possibility that an influence may be exerted upon the driving of the vehicle, are those phenomena whose future path of progression is predicted to be in the direction towards the recommended route 24 for the vehicle. In the following explanation, it will be assumed that, among the icons 21a through 21f that are crowded together, it is the icons 21b, 21d, and 21f whose predicted future paths are directed towards the south-west.

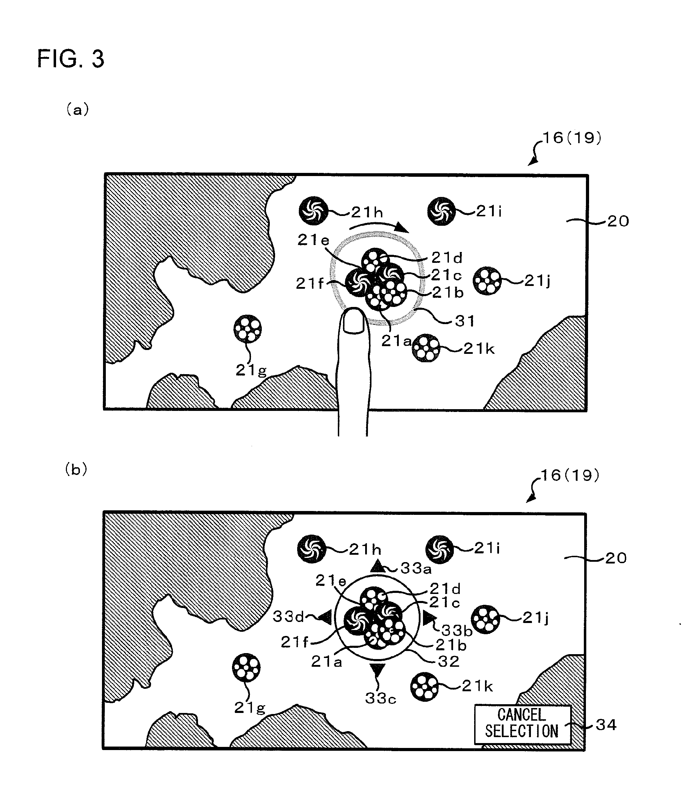

Fig. 3 is a pair of figures for explanation of operation for designation of the desired icons 21a through 21f from among the icons 20a through 20k displayed upon the map 20 that denote weather information. As shown in Fig. 3(a), the user draws a rough circle 31 with his finger so as to surround the icons 21a through 21f that are crowded together. As a result, as shown in Fig. 3(b), a circle 32 having almost the same position and size as the hand-drawn circle 31 is displayed upon the display monitor 16. The icons 21a through 21f within this circle 32 become the icons designated by the user. Moreover, the user can select the icons 21a through 21f displayed upon the display monitor 16 by designating a direction of shifting using this circle 32. Triangular marks 33a through 33d for guidance are displayed at the top, bottom, left, and right of this circle 32. Furthermore, a selection cancellation button 34 is also displayed upon the display monitor 16. When this selection cancellation button 34 is pressed, the circle 32 and the triangle marks 33a through 33d are erased, and the designation of the icons 21a through 21f is cancelled.

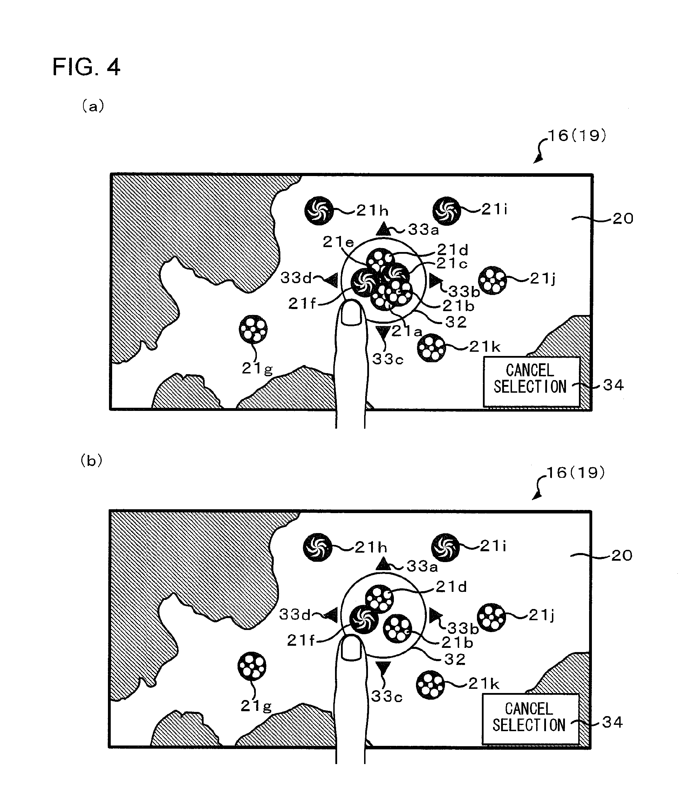

Fig. 4 is a pair of figures for explanation of operation for selecting, from among the specified icons 21a through 21f, the icons 21b, 21d, and 21f that are to be displayed upon the display monitor 16. As shown in Fig. 4(a), the user presses a position upon the circumference of the circle 32. As a result, as shown in Fig. 4(b), among the icons 21a through 21f that are crowded together, only those icons 21b, 21d, and 21f are displayed that are shifting in the direction from the center of the circle 32 towards the position that was pressed (i.e. that are shifting in the south-west direction). As described above, among the icons 21a through 21f that are crowded together, those that correspond to weather phenomena that may exert some influence upon the driving of the vehicle are the ones whose predicted future paths of progression are towards the south-west direction. By pressing at a position on the circumference of the circle 32 towards the south-west direction from its center, the user is able to display only those icons 21b, 21d, and 21f, among the icons 21a through 21f, whose predicted future paths are towards the southwest direction.

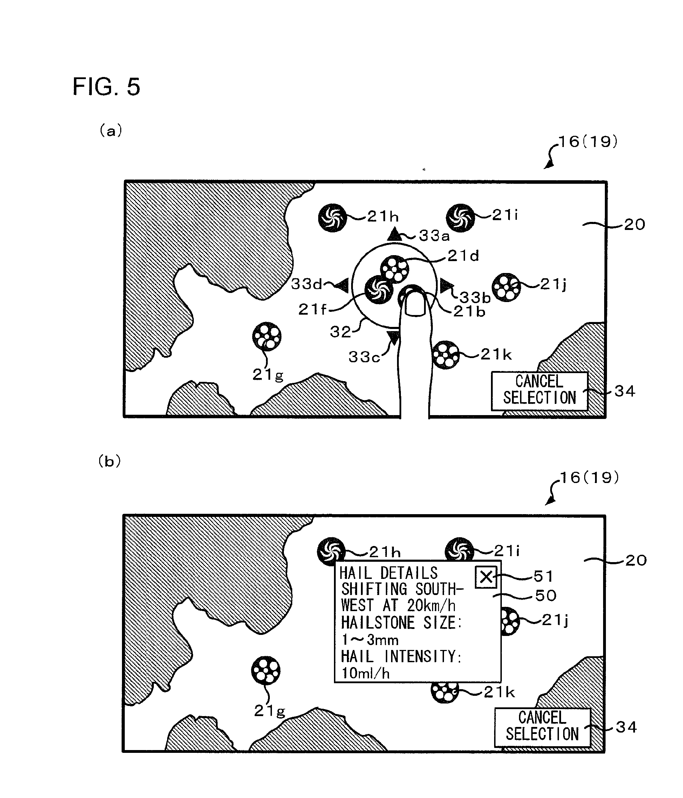

In Fig. 5(a) a situation is shown in which the user presses upon some particular one icon 21b, and then, as shown in Fig. 5(b), a detailed information window 50 is displayed, upon which appears detailed weather information corresponding to that icon 21b that has been pressed. A closing button 51 is displayed upon this detailed information window 50 along with the above detailed weather information. Since this icon 21b is one that denotes hail, accordingly detailed information relating to hail is displayed in the detailed information window 50. When the closing button 51 is pressed, the detailed information window 50 is closed.

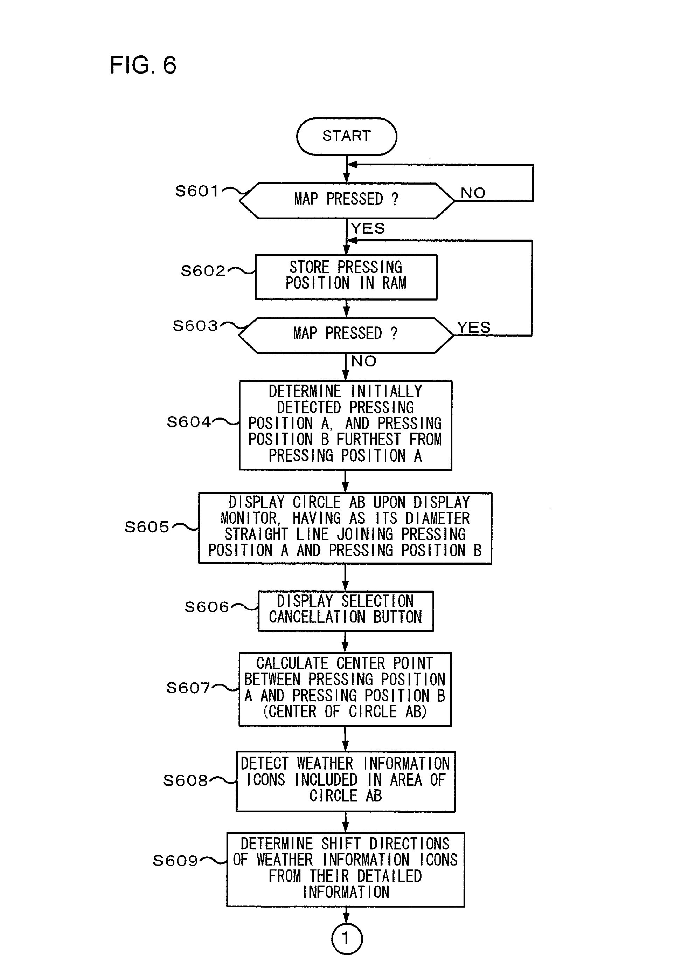

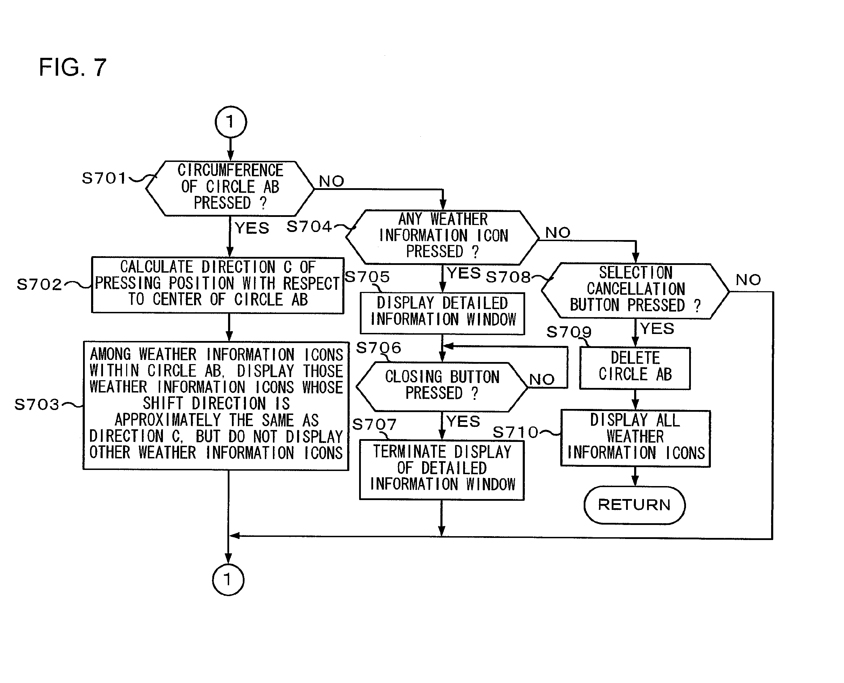

Next, the icon display processing in this embodiment of the present invention will be explained with reference to the flow charts shown in Figs. 6 and 7. The processing of Figs. 6 and 7 is executed by the control circuit 11, according to a program that is started when the display of weather information is selected from a menu not shown in the figures, so as to command a map upon which weather information is shown to be displayed.

First, in a step S601, on the basis of the signal outputted from the touch panel 19 and the position of pressing as calculated by the touch panel control unit 110, a decision is made as to whether or not the map 20 is being pressed. If the map 20 is being pressed, then an affirmative decision is reached in this step S601, and the flow of control proceeds to a step S602. But if the map 20 is not being pressed, then the step S601 is repeated. In the step S602, the position of pressing is stored in the RAM 13. And in the next step S603 a decision is made as to whether or not the map 20 is still being pressed. If the map 20 is still being pressed, then an affirmative decision is reached in this step S603, and the flow of control returns to the step S602. But if the map 20 is not still being pressed, then a negative decision is reached in this step S603, and the flow of control proceeds to a step S604.

In this step S604, the initially detected pressing position A, and that pressing position B among all the pressing positions that have been detected that is furthest from the pressing position A, are determined. And in the next step S605, a circle AB (corresponding to the circle 32 in Fig. 3(b)) is displayed upon the display monitor 16, having as its diameter the straight line joining the pressing position A and the pressing position B. Along with this circle AB, triangle marks 33a through 33d for specifying the orientation of the predicted future path are also displayed. Then in the next step S606 the selection cancellation button 34 is displayed upon the display monitor 16.

In the next step S607, the center point between the pressing position A and the pressing position B (that is the center of the circle AB) is calculated. Then in the next step S608 weather information included in the region determined by the circle AB is searched for, and the icons 21a through 21f denoting the weather information that has been found are determined (hereinafter these will be termed the "weather information icons"). Then in the final step S609 the directions of shifting of the weather information icons 21a through 21f included in the circle AB (i.e. their predicted future paths) are determined from the detailed weather information that corresponds to these weather information icons 21a through 21f. The sought weather information and the predicted future paths are acquired from the weather information table stored in the reception memory 112.

In a step S701 of Fig. 7, based upon the signal outputted from the touch panel 19 and the pressing position as calculated by the touch panel control unit 110, a decision is made as to whether the circumference of the circle AB is being pressed. If the circumference of the circle AB is being pressed then an affirmative decision is reached in this step S701, and the flow of control proceeds to a step S702. But if the circumference of the circle AB is not being pressed, then a negative decision is reached in this step S701 and the flow of control is transferred to a step S704.

In the step S702, the direction C of the pressing position with respect to the center of the circle AB is calculated. Then in the next step S703, among the weather information icons 21a through 21f within the circle AB, those weather information icons 21b, 21d, and 21f whose directions of shifting are approximately the same as the direction C are displayed upon the display monitor 16, while the other weather information icons 21a, 21c, and 21e are deleted. Here by those weather information icons 21b, 21c, and 21e whose directions of shifting are approximately the same as the direction C, is meant those weather information icons 21a, 21c, and 21e whose predicted future paths of progression are in directions that coincide with the direction C in azimuth angle, within a range of ±10°. The permitted range within which the direction of progression of a weather information icon and the direction C are considered to be approximately the same is not limited to being ±10°; it may be changed as appropriate, to any accuracy desired by the user. The icons 21g through 21k that lie outside the circle AB continue to be displayed just as they are. And then the flow of control returns to the step S701.

In the next step S704, on the basis of the signal outputted from the touch panel 19 and the pressing position as calculated by the touch panel control unit 110, a decision is made as to whether or not any one of the weather information icons 21b, 21d, and 21f through 21k that are being displayed upon the display monitor 16 is being pressed. If one of the weather information icons 21b, 21d, and 21f through 21k that are being displayed upon the display monitor 16 is being pressed, then an affirmative decision is reached in this step S704, and the flow of control proceeds to a step S705. But if none of the weather information icons 21b, 21d, and 21f through 21k that are being displayed upon the display monitor 16 is being pressed, then a negative decision is reached in this step S704, and the flow of control is transferred to a step S708.

In the step S705, the detailed information window 50 for displaying the detailed weather information corresponding to the weather information icon 21b that has been pressed is displayed on the display monitor 16. Then in a step S706, on the basis of the signal outputted from the touch panel 19 and the pressing position as calculated by the touch panel control unit 110, a decision is made as to whether on not the closing button 15 is being pressed. If the closing button 51 is being pressed, then an affirmative decision is reached in this step S706, and the flow of control proceeds to a step S707. But, if the closing button 51 is not being pressed, then a negative decision is reached in this step S706, and the step S706 is repeated. In the step S707 display of the detailed information window 50 is terminated, and then the flow of control returns to the step S701.

In the step S708, on the basis of the signal outputted from the touch panel 19 and the pressing position as calculated by the touch panel control unit 110, a decision is made as to whether on not the selection cancellation button 34 is being pressed. If the selection cancellation button 34 is being pressed, then an affirmative decision is reached in this step S708, and the flow of control proceeds to a step S709. But, if the selection cancellation button 34 is not being pressed, then a negative decision is reached in this step S708, and the flow of control returns to the step S701.

In the step S709, the circle AB is deleted from the display screen. Then in a step S710 all of the weather information icons 21a through 21k are displayed upon the display monitor 16, including those whose display was eliminated in the step S703. Then the flow of control returns.

The navigation device 1 according to the embodiment of the present invention described above provides the following operational benefits.
(1) It is arranged to designate the weather information icons 21a through 21f that are crowded together as a group, and, from among these designated weather information icons 21a through 21f, only to display those weather information icons 21b, 21d, and 21f for which it is predicted that the future paths will be almost in the same direction as a direction designated by the user. The icons that are necessary as weather information from the point of view of the user are the weather information icons 21b, 21d, and 21f for hurricanes or storms or the like whose predicted future paths are directed towards the recommended route 24 for the vehicle, and that thus may exert some influence upon the driving of the vehicle. Furthermore, since the weather information icons 21a through 21f are thinned out before being displayed, accordingly some of the plurality of weather information icons that were crowded together are no longer displayed, and accordingly the visibility of the weather information icons that remain becomes good. Moreover, since the mutual overlapping of the weather information icons themselves is reduced, accordingly operation by the user to press the desired weather information icon and to display its detailed information window 50 becomes simple and easy.

(2) Since the weather information icons 21a through 21f are designated by surrounding the weather information icons 21a through 21f with the diagram 31 drawn by hand, accordingly it is simple and easy to designate the weather information icons 21a through 21f.

(3) It is arranged for the circle 32 to be displayed upon the display monitor 16 on the basis of the diagram 31 that is drawn by hand, and for it to be possible to designate a direction of shifting for the icons by pressing a point on the circumference of this circle 32 that has been displayed, so as to select those weather information icons 21b, 21d, and 21f that are to be displayed upon the display monitor 16. Accordingly, by a simple operation, it is possible to ensure that only those weather information icons that are necessary from the point of view of the user for weather information are displayed upon the display monitor 16.

The above embodiment may be varied in the following ways.

### - Variant Embodiment #1 -

It would also be acceptable to arrange for the scale of the map 20 to become larger when the rough circle 31 is being drawn by hand so as to surround the weather information icons 21a through 21f. For example, it may be arranged for the scale of the map 20 to increase from 1/20,000 to 1/8,000. This is done because it causes the crowding together of the weather information icons to become less serious, since the map display becomes more detailed due to the scale of the map 20 increasing in this manner, and the gaps between the weather information icons become larger.

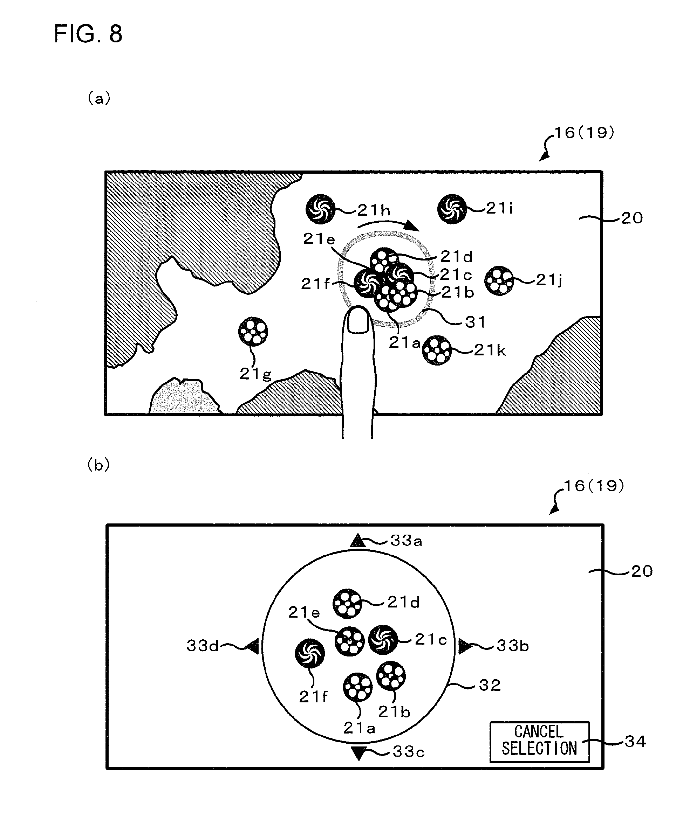

For example when, as shown in Fig. 8(a), the rough circle 31 is drawn by hand so as to surround the weather information icons 21a through 21f that are crowded together, then, as shown in Fig. 8(b), the circle 32 is displayed upon a map 20 whose scale has been increased. Due to this, the crowding together of the weather information icons 21a through 21f becomes less severe, so that the visibility of the weather information icons 21a through 21f becomes satisfactory. Moreover, since the mutual overlapping of the weather information icons is reduced, accordingly operation by the user to press any desired weather information icon and to display its detailed information window 50 becomes simple and easy.

The icon display processing in this variant embodiment #1 will now be explained with reference to the flow charts of Figs. 6, 7, and 9. The processing of Figs. 6, 7, and 9 is executed by the control circuit 11, according to a program that is started when the display of weather information is selected from a menu not shown in the figures, so as to command a map upon which weather information is shown to be displayed. To the same steps as ones in the icon display processing described above with reference to the first embodiment the same reference symbols will be appended, and the following explanation will focus principally upon the points of difference with the icon display processing described above with reference to the first embodiment.

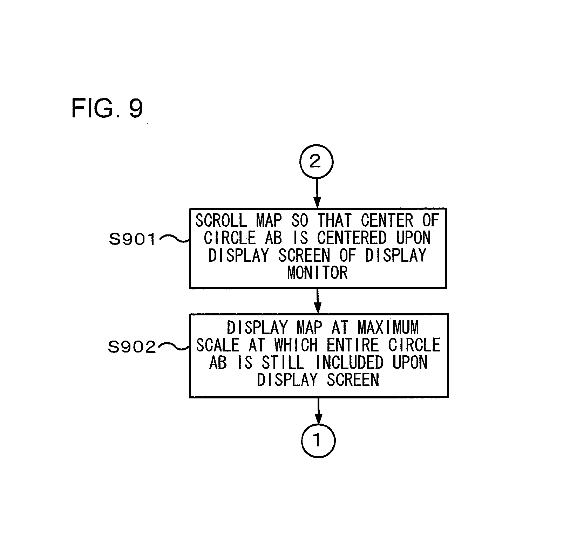

After the determination of the shift directions of the weather information icons 21a through 21f in the step S609 of the Fig. 6 flow chart, the flow of control is transferred to a step S901 of the Fig. 9 flow chart. In this step S901, the map 20 is scrolled so that the center of the circle AB is centered upon the display screen of the display monitor 16. Then in the next step S902 the map 20 is displayed upon the display monitor 16 at the maximum scale at which the entire circle AB is still included upon the display screen of the display monitor 16. Then the flow of control is transferred to the step S701 of Fig. 7.

### - Variant Embodiment #2 -

Sometimes it may happen that the weather information icons are still mutually overlapped, even though only those weather information icons are displayed whose shift direction is approximately the same as the direction designated by the user. In this type of case it will be acceptable to arrange to designate the mutually overlapped weather information icons, and to change the scale of the map so that these designated weather information icons do not overlap one another. For example, the scale of the map may be increased from 1/20,000 to 1/8,000. By doing this, the operation to press any desired one of the weather information icons and to display its detailed information window 50 becomes simple and easy.

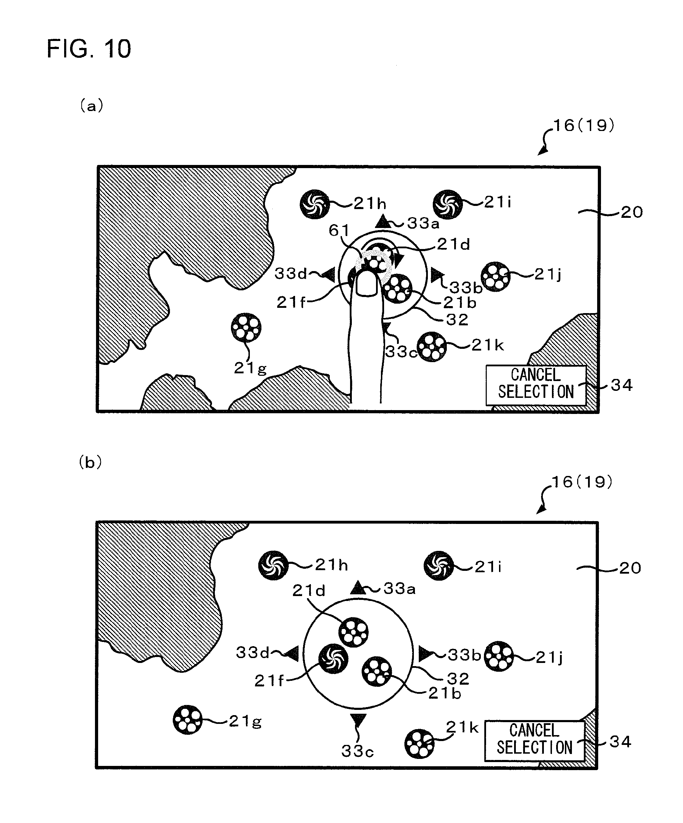

For example, as shown in Fig. 10(a), after the circle 32 has been displayed upon the display monitor 16, a contour 61 may be described by hand, so as to press the weather information icons 21b, 21d, and 21f within the circle 32 in succession. As a result, as shown in Fig. 10(b), the map 20 is displayed at a scale at which the weather information icons 21b, 21d, and 21f that have been successively pressed do not mutually overlap one another.

The icon display processing in this variant embodiment #2 will now be explained with reference to the flow charts of Figs. 6, 11, and 12. The processing of Figs. 6, 11, and 12 is executed by the control circuit 11, according to a program that is started when the display of weather information is selected from a menu not shown in the figures, so as to command a map upon which weather information is shown to be displayed. To the same steps as ones in the icon display processing described above with reference to the first embodiment the same reference symbols will be appended, and the following explanation will focus principally upon the points of difference with the icon display processing described above with reference to the first embodiment. Here, the explanation will assume that a timer that measures time is incorporated within the control circuit 11.

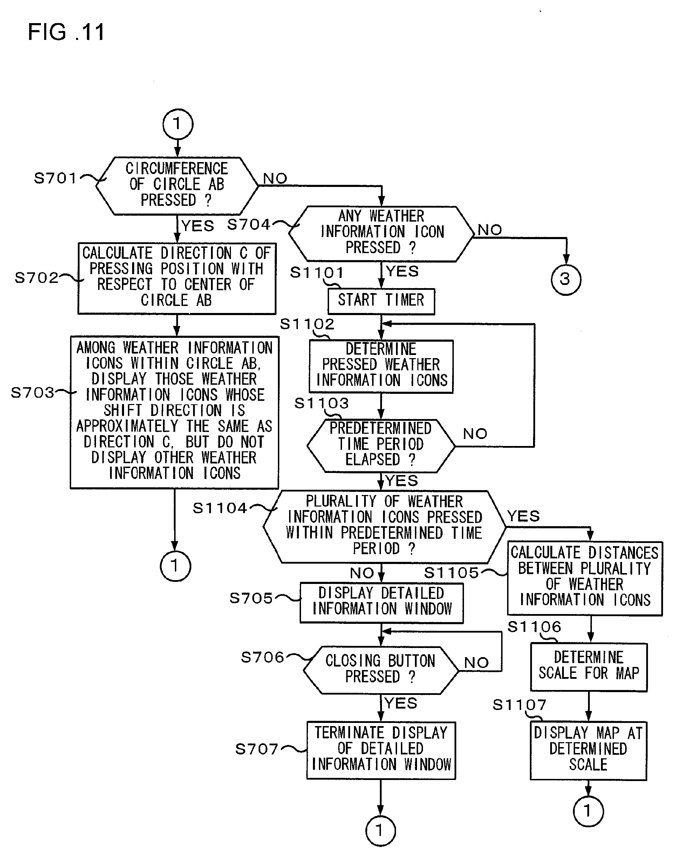

After the shift directions of the weather information icons 21a through 21f have been determined in the step S609 of Fig. 6, the flow of control proceeds to a step S701 of Fig. 11.

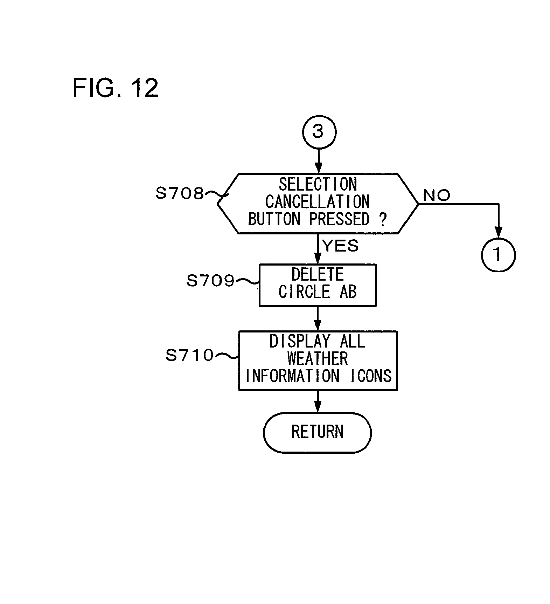

In the step S704, on the basis of the signal outputted from the touch panel 19 and the pressing position calculated by the touch panel control unit 110, a decision is made as to whether or not any one of the weather information icons 21b, 21d, and 21f through 21k that are being displayed upon the display monitor 16 has been pressed. If any one of the weather information icons 21b, 21d, and 21f through 21k being displayed upon the display monitor 16 has been pressed, then an affirmative decision is reached in this step S704, and the flow of control is transferred to a step S1101. But, if none of the weather information icons 21b, 21d, and 21f through 21k being displayed upon the display monitor 16 has been pressed, then a negative decision is reached in this step S704, and the flow of control is transferred to the step S708 of Fig. 12.

In a step S1101, a timer internal to the control circuit 11 is started. Then in the next step S1102 the weather information icons 21b, 21d, and 21f that have been pressed are determined. In the next step S1103, a decision is made as to whether or not the elapsed time period measured by the timer has reached a predetermined time period. If the elapsed time period measured by the timer has reached the predetermined time period, then an affirmative decision is reached in this step S1103, and the flow of control proceeds to a step S1104. But if the elapsed time period measured by the timer has not yet reached the predetermined time period, then a negative decision is reached in this step S1103, and the flow of control returns to the step S1102.

In the step S1104, on the basis of the pressing of the weather information icons 21b, 21d, and 21f that has been detected, a decision is made as to whether or not a plurality of the weather information icons have been pressed within the predetermined time period. If a plurality of the weather information icons have been pressed within the predetermined time period, then an affirmative decision is reached in this step S1104, and the flow of control proceeds to a step S1105. But if only one of the weather information icons has been pressed within the predetermined time period, then a negative decision is reached in this step S1104, and the flow of control is transferred to the step S705.

In the step S1105, the distances between the plurality of weather information icons 21b, 21d, and 21f are calculated. Then in the next step S1106, on the basis of these distances between the weather information icons 21b, 21d, and 21f, a scale is determined for the map 20 to be displayed upon the display monitor 16. Since the sizes for the weather information icons 21b, 21d, and 21f displayed upon the display screen are determined in advance, accordingly it is possible to decide whether or not the weather information icons 21b, 21d, and 21f will overlap one another from the distances between the weather information icons 21b, 21d, and 21f and each proposed scale for the map. And the smallest one among the proposed scales for the map 20 for which it has been decided, by this decision, that the icons do not overlap, is determined as being the scale at which the map 20 is to be displayed upon the monitor 16. Then in the next step S1107 the map 20 is displayed upon the display monitor 16 at this scale that has been determined. Then the flow of control is returned to the step S701.

Since it is arranged for it to be possible to select the weather information icons 21d and 21f that are mutually overlapped on the basis of the contour 61 that is drawn by hand, accordingly it is possible to select these weather information icons 21d and 21f that are mutually overlapped with a simple operation.

Furthermore, it would also be acceptable to arrange to detect the mutual distances between the various weather information icons 21b, 21d, and 21f within the circle 32 automatically, and to display the map 20 automatically at a scale at which these weather information icons 21b, 21d, and 21f within the circle 32 do not overlap one another.

### - Variant Embodiment #3 -

While in the above explanation various implementations were described in which weather information was associated with information about predicted future paths, the present invention is not to be considered as being limited to the case in which weather information icons like the weather information icons 21a through 21k are displayed; it may be applied to any system in which subjects that are shifting are displayed as icons. For example the present invention may be applied to a vehicle allocation system for taxis, in which the current positions of taxis are displayed upon a map as icons.

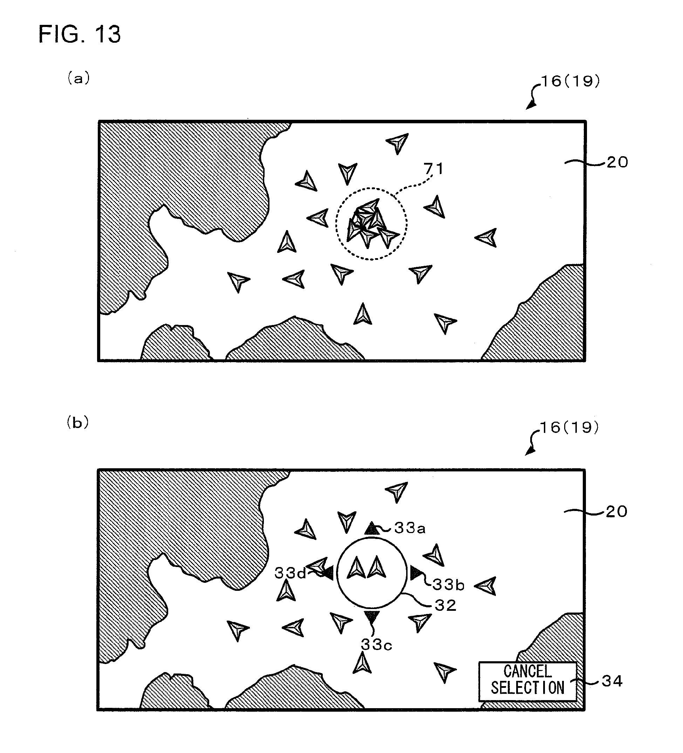

As shown in Fig. 13(a), when, in order to monitor the current positions of taxis, these current positions of taxis are displayed upon a map 20 as icons, sometimes it happens that the icons become crowded together as shown within the circle 71, so that the visibility of the icons becomes bad. In this type of case, a circle may be traced roughly by hand so as to surround those icons that are crowded together, so that a circle 32 is displayed upon the display monitor 16. And for each driving direction of a taxi, by pressing upon the circumference of this circle 32, it is possible to display the icons within the circle 71. For example, if the north side of the circumference of the circle 32 is pressed, as shown in Fig. 13(b), it is possible to display only the icons for those taxis that are currently being driven in the northwards direction.

The above explanation is only an example, and the present invention is not to be considered as being limited in any way by the embodiments described above. For example, it would also be possible to apply the present invention to electronic information processing that is capable of displaying a map, but that is not endowed with any function of navigation.

## Claims

1. A map display device, comprising:
a map display control unit that displays a map upon a display monitor;
an icon display control unit that displays a plurality of shifting subjects as icons upon a map;
an icon designation unit that designates, from among the plurality of icons being displayed, a plurality of icons that are crowded together; and
a shift direction designation unit that designates a shift direction of icons to be searched for; wherein
the icon display control unit displays, among the icons designated by the icon designation unit, those icons that are shifting in approximately the same direction as the shift direction designated by the shift direction designation unit.

2. A map display device according to Claim 1, wherein the shifting subjects are related to weather.

3. A map display device according to Claim 1 or Claim 2, wherein:
the display monitor comprises a touch panel; and
the icon designation unit designates icons that have been surrounded by a contour drawn while the touch panel is being pressed.

4. A map display device according to Claim 3, further comprising a circular contour display control unit that displays a circular contour over the map, on the basis of the contour drawn while the touch panel is being pressed; wherein
the shift direction designation unit designates the shift direction on the basis of a position upon the circumference of the circular contour that is pressed.

5. A map display device according to Claim 4, wherein the map display control unit changes the scale of the map displayed upon the display monitor on the basis of the circular contour.

6. A map display device according to Claim 4, further comprising an icon selection unit that selects a plurality of specified icons from among a plurality of icons displayed within the circular contour; wherein
the map display control unit changes the scale of the map so that the selected plurality of icons do not overlap one another.

7. A map display device according to Claim 6, wherein the icon selection unit selects, from among the plurality of icons designated by the icon designation unit that are crowded together, those icons that overlap a contour drawn while the touch panel is being pressed.
